# EUROPÄISCHE PATENTSCHRIFT

(11) **EP 2 709 436 B1**
(45) Veröffentlichungstag und Bekanntmachung des Hinweises auf die Patenterteilung: **18.04.2018**
(21) Anmeldenummer: 11720499.0
(22) Anmeldetag: 19.05.2011
(51) Int. Cl.: A01G 27/04

(54) **BEWÄSSERUNGSEINRICHTUNG MIT EINER KAPILLAR-WASSERTRANSPORTLEITUNG**
WATERING DEVICE COMPRISING A CAPILLARY WATER TRANSPORT LINE
SYSTÈME D'ARROSAGE COMPRENANT UNE CONDUITE D'EAU À CAPILLARITÉ

(43) Veröffentlichungstag der Anmeldung: 26.03.2014
(73) Patentinhaber: HUSQVARNA AB, 561 82 Huskvarna (SE)
(72) Erfinder: CLAUS, Ralf, 89171 Illerkirchberg (DE); RENNER, Thomas, 89079 Ulm (DE)
(74) Vertreter: Finkele, Rolf
(86) Internationale Anmeldenummer: PCT/EP2011/058148
(87) Internationale Veröffentlichungsnummer: WO 2012/155977

(56) Entgegenhaltungen:
- WO-A1-2009/132380
- DE-B- 1 064 281
- ES-U- 293 307
- FR-A- 1 558 376
- US-A- 4 115 951

## Beschreibung

Die Erfindung betrifft eine Bewässerungseinrichtung, insbesondere nach Art einer Topfpflanzenbewässerung, mit einer Kapillar-Wasertransportleitung.

Für die Bewässerung von Topfpflanzen sind Bewässerungseinrichtungen bekannt, bei welchen wenigstens ein Strang aus faserigem Material als Wassertransportleitung zwischen einem Vorratsbehälter und einem Erdsubstrat um die zu bewässernde Pflanze verläuft. Durch den Kapillareffekt innerhalb des faserigen Materials wird mit geringer Fließrate Wasser aus dem Vorratsbehälter über den Strang aus faserigem Material zu dem Erdsubstrat transportiert, insbesondere zumindest abschnittsweise auch entgegen der Schwerkraft. Als faseriges Material dienen beispielsweise Wollfäden oder andere organische Fasern, aber auch Kunststofffasern sind gebräuchlich. Der Strang aus faserigem Material kann von einem wasserdichten Schlauch umschlossen sein.
Das dem Vorratsbehälter abgewandte Ende des Strangs wird typischerweise in das Erdsubstrat eingedrückt, so dass das faserige Material in direktem wasserübertragenden Kontakt mit dem Erdsubstrat steht.

Aus der Offenlegungsschrift WO 2009/132380 A1 ist eine Bewässerungseinrichtung mit einer Kapillar-Wassertransportleitung bekannt, welche einen Strang aus faserigem Material enthält und zum Kontakt des faserigen Materials an einem Abgabe-Ende der Wassertransportleitung mit einem wenigstens eine Pflanze tragenden Erdsubstrat ausgebildet ist. Dabei ist an dem Abgabe-Ende der Wassertransportleitung ein formstabiler Erdspieß mit einem Griffteil und einem Einsteckteil ausgebildet. Dieser ist so angeordnet, dass das faserige Material mit einem in Betriebsstellung mit dem Erdsubstrat in Kontakt bringbaren Abschnitt an dem Einsteckteil festgelegt ist.

Der vorliegenden Erfindung liegt die Aufgabe zugrunde, eine vorteilhaft handhabbare derartige Bewässerungseinrichtung anzugeben.

Die Erfindung ist im unabhängigen Anspruch beschrieben. Die abhängigen Ansprüche enthalten vorteilhafte Ausgestaltungen und Weiterbildungen der Erfindung.

Der am Ende der Wassertransportleitung angeordnete Erdspieß ermöglicht eine besonders vorteilhafte Handhabung der Bewässerungseinrichtung durch den Benutzer und gewährleistet zugleich eine besonders vorteilhafte und definierte Verteilung des von dem faserigen Material an das Erdsubstrat abgegebenen Wassers. Die Festlegung des Strangs aus faserigem Material relativ zum Einsteckteil und die durch Unterteilung des Erdspießes in ein Griffteil und ein Einsteckteil augenfällig vorgegebene Einstecktiefe gewährleisten auf einfache Weise einen definierten Flächenkontakt zwischen dem Strang aus faserigem Material und dem Erdsubstrat.

Der Strang aus faserigem Material ist vorteilhafterweise bezüglich der Wassertransportrichtung längs des Strangs stromaufwärts des Griffteils von einer wasserdichten Hülle umgeben, so dass eine Verdunstung von Wasser aus dem Strang in die Umgebung weitgehend vermieden werden kann. Vorteilhafterweise ist der Strang von dem umhüllten Abschnitt her durch einen Kanal im Griffteil hindurch geführt, wobei vorzugsweise sich die Hülle bis in den Kanal hinein erstreckt.

Der Strang aus faserigem Material verläuft von dem Griffteil in Richtung der dem Griffteil abgewandten Spitze ohne Umhüllung und steht vorzugsweise in diesem Abschnitt mit dem Erdsubstrat in wasserübertragendem Kontakt. Der Strang ist an dem Einsteckteil von dem Griffteil beabstandet umgelenkt und zu dem Griffteil zurückgeführt, wo das stromabwärts liegende Ende des Strangs festgelegt, insbesondere festgeklemmt sein kann.

Vorteilhafterweise ist das Griffteil des Erdspießes in der Weise unsymmetrisch geformt, dass sich aus der unsymmetrischen Form für den Benutzer augenfällig oder zwingend eine bestimmte Ausrichtung des Erdspießes relativ zu einer Pflanze in der Art ergibt, dass der in Wassertransportrichtung von dem Griffteil in Richtung zu der Spitze des Einsteckteils führende Abschnitt auf einer der Pflanze bzw. deren Haupt-Wurzelbereich zugewandten Seite des Einsteckteils liegt und eine Wasserabgabe bevorzugt in diesen Bereich des Erdsubstrats erfolgt. Insbesondere bei nach Umlenkung des Strangs und Rückführung bis zu dem Griffteil mit Kontakt zu dem Erdsubstrat auf der der Pflanze abgewandten Seite des Einsteckteils ergibt sich eine vorteilhafte Verteilung mit stärkerer Wasserabgabe an einen stärker durchwurzelten und geringerer Wasserabgabe an einem geringer durchwurzelten Bereich des Erdsubstrats. Eine unsymmetrische Ausformung kann in vorteilhafter Ausführung durch eine quer zur Steckrichtung des stromaufwärts des Griffteils liegenden Abschnitt des Strangs in das Griffteil gegeben sein, wodurch der Benutzer den Erdspieß intuitiv oder durch z. B. die Leitungsführung außerhalb eines Pflanztopfes über den Topfrand zwangsläufig so ausrichtet, dass der stromaufwärts des Griffteils liegende Abschnitt der Wassertransportleitung von der Pflanze weg weist.

Das Griffteil des Erdspießes besteht in vorteilhafter Ausführung aus wenigstens zwei, vorzugsweise genau zwei Gehäuseteilen, welche zwischen einer Schließstellung und einer Öffnungsstellung relativ zueinander verlagerbar sind. Die Schließstellung bildet zugleich die Betriebsstellung, in welcher der Strang relativ zu dem Einsteckteil festgelegt ist. Die Öffnungsstellung kann insbesondere eine Zwischenstellung während der Montage, wenn der Strang mit dem Erdspieß verbunden wird, darstellen. Vorteilhafterweise kann der Strang lösbar mit dem Erdspieß verbunden sein, so dass z. B. ein Strang als Verbrauchsteil auswechselbar mit einem längerfristig verwendbaren Erdspieß verbunden sein kann und zum Austausch eines Strangs gegen einen neuen die Gehäuseteile voneinander weg in die Öffnungsstellung verlagerbar sind. Die beiden Gehäuseteile bilden vorteilhafterweise einen einheitlichen Kunststoff-Spritzgusskörper und sind in diesem vorteilhafterweise über ein Filmscharnier miteinander verbunden.

Die Erfindung ist nachfolgend anhand bevorzugter Ausführungsbeispiele unter Bezugnahme auf die Abbildungen noch eingehend veranschaulicht. Dabei zeigt:
- Fig. 1: eine Bewässerungsanordnung mit Pflanzgefäß,
- Fig. 2: einen Erdspieß mit einem Leitungsabschnitt,
- Fig. 3: einen einteiligen Kunststoffkörper für einen Erdspieß,
- Fig. 4: den Kunststoffkörper nach Fig.3 in anderer Ansicht,
- Fig. 5: die Spitze des Kunststoffkörpers in vergrößerter Darstellung,
- Fig. 6: eine zu Fig. 5 alternative Ausführung.

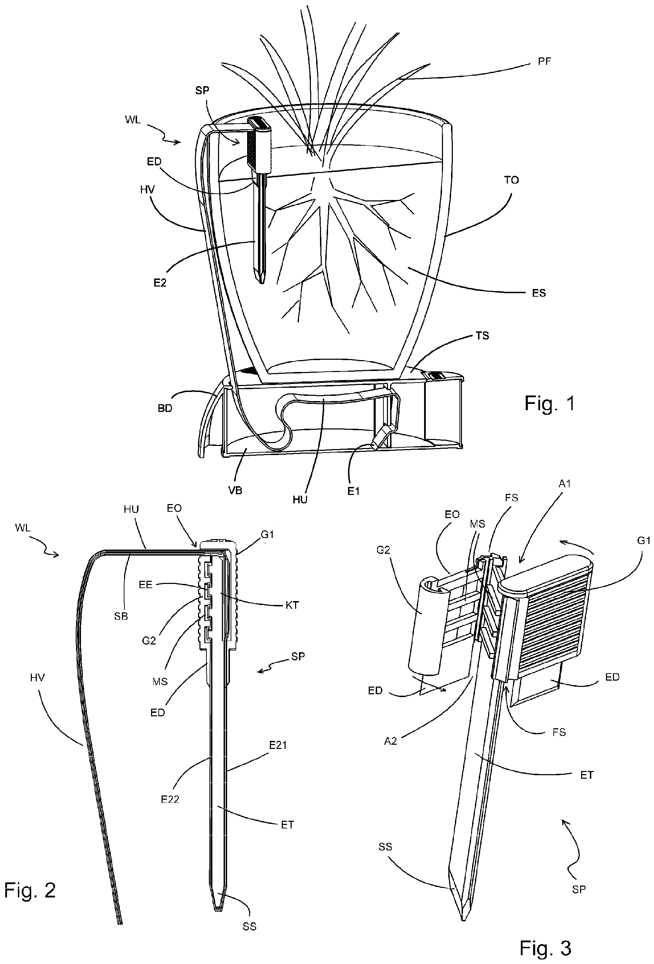

Fig. 1 zeigt als Schnittdarstellung eine Bewässerungseinrichtung mit einem Pflanzgefäß TO, welches mit einem Erdsubstrat ES befüllt ist. Eine Pflanze PF mit das Erdsubstrat durchwurzelndem Wurzelwerk ist schematisch angedeutet.

Die Bewässerungseinrichtung enthält insbesondere einen Wasservorratsbehälter VB, welcher im skizzierten Beispielsfall mit einer haubenförmigen Abdeckung BD abgedeckt ist. Eine Oberseite TS der Abdeckung bildet vorteilhafterweise zugleich eine Stützfläche, auf welcher ein Pflanzgefäß TO direkt oder unter Zwischenfügung einer Unterlage abgestützt aufstellbar ist. Eine Wassertransportleitung WL enthält eine wasserdichte Hülle HU und von dieser umschlossen ein Band aus faserigem Material, welches zum Wassertransport vom Wasserbehälter VB zu dem Erdsubstrat ES über den Kapillareffekt ausgebildet ist. Solche Wasserleitungen sind an sich bekannt. Im skizzierten Beispiel sind Hülle HU und faseriges Material bandförmig flach ausgeführt. Ein erstes Ende E1 des faserigen Materials der Wassertransportleitung steht mit im Wasservorratsbehälter VB eingefülltem Wasser in Verbindung und nimmt Wasser aus dem Vorratsbehälter auf. Das Wasser wird durch den Kapillareffekt in dem von der Hülle HU umschlossenen faserigen Material der Wassertransportleitung insbesondere auch in einem ansteigenden Abschnitt HV entgegen der Schwerkraft von dem ersten Ende E1 weg in Richtung eines zweiten Endes E2 der Wassertransportleitung transportiert. Das zweite Ende E2 der Wassertransportleitung ragt in das Erdsubstrat ES. An dem zweiten Ende E2 der Wassertransportleitung steht das faserige Material ohne Umhüllung mit dem Erdsubstrat ES wasserübertragend in Kontakt und gibt Wasser an das Erdsubstrat ES ab.

An dem zweiten Ende der Wassertransportleitung ist ein Erdspieß SP vorgesehen, welcher mit einem Einsteckteil ET in das Erdsubstrat ES eingesteckt ist und welcher ein Griffteil GR aufweist, welches oberhalb des Erdsubstrats ES für den Benutzer zugänglich angeordnet ist. Einsteckteil ET und Griffteil GR sind fest miteinander verbunden. Das Einsteckteil ET ist an seinem dem Griffteil GR abgewandten Ende vorteilhafterweise spitz zulaufend ausgebildet, um das Einstecken in das Erdsubstrat ES zu erleichtern.

Fig. 2 zeigt den Erdspieß SP mit einem Teil der Wassertransportleitung in geschnittener Ansicht. Die Wassertransportleitung führt in typischer Betriebslage mit einem ansteigenden Abschnitt HV über einen oberen Rand des Pflanzgefäßes TO und ist bei einer Eintrittsöffnung EO in das Griffteil des Erdspießes eingeführt. Die das bandförmige, faserige Material SB umgebende Hülle HU reicht vorteilhafterweise bis in die Eintrittsöffnung EU des Griffteils des Erdspießes. Das Band aus faserigem Material der Wassertransportleitung ist ohne Umhüllung mit einem Abschnitt E2, welcher von dem Griffteil in Richtung der Spitze SS des Einsteckteils ET verläuft, herausgeführt, an oder bei der Spitze SS des Einsteckteils ET verläuft, herausgeführt, an oder bei der Spitze SS umgelenkt und mit einem Abschnitt E22 des Bandes aus faserigem Material zu dem Griffteil zurück geführt und tritt wieder in das Griffteil ein. In dem Griffteil ist das Band aus faserigem Material mit seinem Endbereich EE in einer Mäanderstruktur MS des Griffteils mechanisch festgelegt. Da in den Endbereich oder über diesen hinaus kein Wasser transportiert werden muss, ist die Einklemmung des Bandes aus faserigem Material in der Mäanderstruktur MS nicht nachteilig für den Wassertransport in das Erdsubstrat, da die Wasserabgabe an das Erdsubstrat bereits in den stromaufwärts liegenden Abschnitten E21, E22 des Bandes aus faserigem Material erfolgt. Das Band aus faserigem Material ist vorteilhafterweise im stromaufwärts des Abschnitts E21 liegenden Teilabschnitt innerhalb des Griffteils in seinem Querschnitt und damit seiner Wassertransportfähigkeit weitgehend unbehindert.

Das Griffteil ist vorteilhafterweise aus wenigstens zwei Gehäuseteilen G1, G2 aufgebaut, welche relativ zueinander verlagerbar sind. Insbesondere kann hierdurch die Montage des Erdspießes und dessen Verbindung mit dem zweiten Ende E2 der Wassertransportleitung besonders vorteilhaft gestaltet werden, indem die Wassertransportleitung durch das in einer Öffnungsstellung befindliche Griffteil eingeführt und danach die Gehäuseteile G1, G2 des Griffteils in eine in Fig. 2 dargestellte Schließstellung gebracht werden.

Fig. 3 zeigt eine bevorzugte Ausführung eines Erdspießes, bei welchem ein erstes Griffteil G1 und ein zweites Griffteil G2 über ein Mittelteil miteinander zusammen hängen und damit zum einen unverlierbar miteinander verbunden sind und zum anderen als ein einteiliger Kunststoff-Spritzkörper in einem Spritzgussvorgang herstellbar sind. Das Mittelteil besteht insbesondere aus einem Kernteil KT, welches im montierten Betriebszustand des Erdspießes zwischen den Gehäuseteilen G1 und G2 eingeschlossen ist, und einem starr mit diesem Kernteil KT verbundenen Einsteckteil ET mit der dem Griffteil abgewandten Spitze SS. Die beiden Griffteile G1 und G2 sind über jeweils ein eigenes Kunststoff-Filmscharnier FS mit dem Kernteil KT gelenkig verbunden. Fig. 3 zeigt den einteiligen Kunststoff-Spritzgusskörper des Erdspießes SP in einer Zwischenstellung, in welcher eine erste Aufnahme A1 zwischen dem Gehäuseteil G1 und dem Mittelteil KT und eine zweite Aufnahme A2 zwischen dem zweiten Gehäuseteil G2 und dem Kernteil KT noch zum Einlegen des Bandes aus faserigem Material zugänglich sind. An dem zweiten Gehäuseteil G2 ist eine Aussparung für die Einführöffnung EO in das Griffteil ausgebildet, in welcher in dem in Fig. 2 dargestellten montierten Zustand das Ende der Hülle HU bis in das Griffteil ragend einliegt. Die Einführöffnung EO wird durch einen Deckelabschnitt des ersten Gehäuseteils G1 überdeckt, so dass die Einführöffnung EO und der unmittelbar vor der Einführöffnung EO stromaufwärts des Wassertransports liegende Abschnitt der Wassertransportleitung im wesentlichen quer zur Längsrichtung des Einsteckteils verlaufen. Durch diese Ausgestaltung ist für den Benutzer die in Fig. 1 dargestellte Ausrichtung des Erdspießes beim Einstecken in das Erdsubstrat ES relativ zur Pflanze PF im wesentlichen eindeutig vorgegeben. Die eindeutige Vorgabe der Ausrichtung des Erdspießes für das Einstecken in das Erdsubstrat ES relativ zu einer Pflanze PF hat den Vorteil, dass hierdurch der Abschnitt E21 des zweiten Endes der Wassertransportleitung dem Haupt-Wurzelbereich der Pflanze zugewandt und der Abschnitt E22 dem Haupt-Wurzelbereich abgewandt ist. Hieraus ergibt sich vorteilhafterweise eine bevorzugte Wasserabgabe über den Abschnitt E21 des Bandes aus faserigem Material in Richtung des Haupt-Wurzelbereichs und eine demgegenüber wesentlich verringerte Wasserabgabe an den der Gefäßwand zugewandten und dem Haupt-Wurzelbereich der Pflanze abgewandten Bereich des Erdsubstrats ES.

Von den Gehäuseteilen G1, G2 ragen Fortsätze ED in Richtung der Spitze SS des Einsteckteils ET. Diese Fortsätze decken in dem in Fig. 2 dargestellten Gebrauchszustand des Erdspießes dem Griffteil nahe Abschnitte des Endes E2 des von der Hülle HU freien Bandes SB ab und sind, wie in Fig. 1 dargestellt, zusammen mit dem Einsteckteil zumindest teilweise in das Erdsubstrat einsteckbar. Hierdurch wird der direkte Kontakt des faserigen Materials mit Umgebungsluft und die Verdunstung von Wasser auf diesem Weg verringert. Die Wasserabgabe an das Erdsubstrat erfolgt um die Einstecktiefe der Fortsätze ED von der Oberfläche des Erdsubstrats beabstandet, so dass eine Befeuchtung der Oberflächenschicht und eine Wasserverdunstung aus dieser vermindert ist.

In der Zwischenstellung nach Fig. 3 ist auch die am zweiten Gehäuseteil G2 und dem Mittelteil KT in komplementären Teilen ausgebildete Mäanderstruktur MS zum Festklemmen des Endbereichs des zweiten Endes des Bandes aus faserigem Material ersichtlich. Erstes Gehäuseteil G1 und zweites Gehäuseteil G2 sind vorzugsweise mit zueinander oder zu dem Mittelteil korrespondierend ausgeführten Rast- oder Schnappstrukturen ausgebildet, so dass nach Einlegen des Bandes aus faserigem Material in den in der Öffnungsstellung nach Fig. 3 befindlichen Erdspieß die Gehäuseteile G1 und G2 lediglich um die Filmscharniere FS schwenkend zusammengedrückt werden müssen und durch die Rast- oder Schnappverbindung in der Schließstellung gehalten sind. Wenn das Griffteil GR durch den Benutzer zerstörungsfrei gelöst werden kann, kann der Benutzer auch unter Beibehaltung des Erdspießes die Wassertransportleitung als Ersatzteil selbst auswechseln.

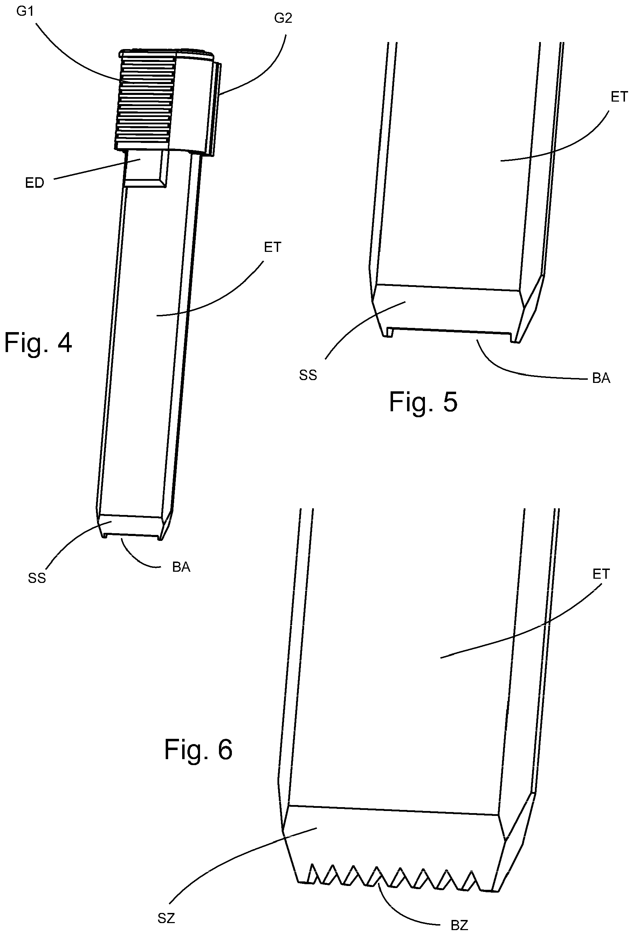

Fig. 4 zeigt den Kunststoffkörper nach Fig. 3 in einer weitgehend geschlossenen Stellung der beiden Griffteile. In Fig. 4 gut zu erkennen ist, dass an der Spitze SS des Einsteckteils ET eine beidseitig begrenzte Aussparung BA vorgesehen ist, welche zur Querfixierung des an der Spitze SS umgelenkten Bandes aus dem faserigen Material dient. Fig. 5 zeigt die Spitze SS mit der Aussparung BA in vergrößerter Darstellung.

Fig. 6 zeigt eine zu Fig. 5 alternative Ausbildung einer Spitze SZ des Einsteckteils ET, wobei in dieser Ausführung die Spitze an der Kante, um welche das Band aus faserigem Material umgelenkt wird, eine Zahnstruktur BZ aufweist, welche gleichfalls zur Querfixierung des umgelenkten Bandes geeignet ist.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Bewässerungseinrichtung mit einer Kapillar-Wassertransportleitung, welche einen Strang (SB) aus faserigem Material enthält und zum Kontakt des faserigen Materials an einem Abgabe-Ende (E2) der Wassertransportleitung (WL) mit einem wenigstens eine Pflanze (PF) tragenden Erdsubstrat (ES) ausgebildet ist,
wobei an dem Abgabe-Ende (E2) der Wassertransportleitung (WL) ein formstabiler Erdspieß (SP) mit einem Griffteil und mit einem Einsteckteil (ET), welches zum Einstecken in ein Erdsubstrat (ES) ausgebildet ist, angeordnet ist, **dadurch gekennzeichnet,**
**dass** das faserige Material mit einem in Betriebsstellung mit dem Erdsubstrat in Kontakt bringbaren Abschnitt (E21, E22) an dem Einsteckteil (ET) festgelegt ist, und dass der Strang aus faserigem Material in Wassertransportrichtung von dem Griffteil mit einem Abschnitt (E21) in Richtung einer Spitze (SS) des Einsteckteils (ET) und nach Umlenkung in einem weiteren Abschnitt (E22) zurück zum Griffteil verläuft.

2. Bewässerungseinrichtung nach Anspruch 1, **dadurch gekennzeichnet, dass** das in Wassertransportrichtung stromabwärts liegende Endbereich (EE) des Strangs (SB) am Griffteil (GR) fixiert, insbesondere eingeklemmt ist.

3. Bewässerungseinrichtung nach Anspruch 1 oder 2, **dadurch gekennzeichnet, dass** der Erdspieß, insbesondere dessen Griffteil (GR) durch unsymmetrische Ausformung eine Ausrichtung des Erdspießes relativ zu einer Pflanze vorgibt, in welcher der bezüglich der Wassertransportrichtung stromabwärts des Griffteils von diesem in Richtung der Spitze (SS) des Einsteckteils (ET) verlaufende Abschnitt (E21) des Strangs auf der der Pflanze (PF) zuweisenden Seite des Einsteckteils (ET) liegt.

4. Bewässerungseinrichtung nach Anspruch 3, **dadurch gekennzeichnet, dass** die asymmetrische Ausformung einen quer zur Steckrichtung des Einsteckteils gerichteten Eintritt (EO) des stromaufwärts des Griffteils (GR) liegenden Abschnitt des Strangs umfasst.

5. Bewässerungseinrichtung nach einem der Ansprüche 1 bis 3, **dadurch gekennzeichnet, dass** der Strang durch das Griffteil hindurch verläuft.

6. Bewässerungseinrichtung nach einem der Ansprüche 1 bis 5, **dadurch gekennzeichnet, dass** die Wassertransportleitung (WL) lösbar mit dem Erdspieß (SP) verbunden ist.

7. Bewässerungseinrichtung nach Anspruch 1 bis 6, **dadurch gekennzeichnet, dass** das faserige Material in Form eines flachen Bandes (SB) vorliegt.

8. Bewässerungseinrichtung nach Anspruch 7, **dadurch gekennzeichnet, dass** das Band auf wenigstens einer seiner beiden gegenüber liegenden Flächen eine nicht ebene Reliefstruktur aufweist.

9. Bewässerungseinrichtung nach einem der Ansprüche 1 bis 8, **dadurch gekennzeichnet, dass** das Griffteil (GR) wenigstens zwei zwischen einer Schließstellung und einer Öffnungsstellung relativ zueinander verlagerbare Gehäuseteile (G1, G2) umfasst.

10. Bewässerungseinrichtung nach Anspruch 9, **dadurch gekennzeichnet, dass** die beiden Gehäuseteile (G1, G2) über Filmscharniere gelenkig mit einem Mittelteil (KT) verbunden sind und mit dem Mittelteil einen zusammenhängenden Kunststoff-Spritzgusskörper bilden.

11. Bewässerungseinrichtung nach Anspruch 9 oder 10, **dadurch gekennzeichnet, dass** das Einsteckteil (ET) starr mit dem Mittelteil (KT) verbunden ist.

12. Bewässerungseinrichtung nach einem der Ansprüche 1 bis 11, **dadurch gekennzeichnet, dass** der stromaufwärts des Erdspießes (SP) liegende Abschnitt des Strangs (SB) aus dem faserigen Material von einer wasserdichten Hülle (HU) umgeben ist.

13. Bewässerungseinrichtung nach Anspruch 12, **dadurch gekennzeichnet, dass** die wasserdichte Hülle (HU) bis hinter eine Einführöffnung (EO) in das Griffteil (GR) des Erdspießes (SP) hinein reicht.

14. Bewässerungseinrichtung nach einem der Ansprüche 1 bis 13, **dadurch gekennzeichnet, dass** Fortsätze (ED) vom Griffteil das faserige Material nahe bei dem Griffteil abdecken und mit dem Einsteckteil in das Erdsubstrat einsteckbar sind.

## Claims

1. Irrigation device with a capillary water transport line containing a strand (SB) of fibrous material and formed for contacting the fibrous material at a discharge end (E2) of the water transport line (WL) with a ground substrate (ES) carrying at least one plant (PF), wherein at the discharge end (E2) of the water transport line (WL) a dimensionally stable ground spike (SP) with a handle part and a plug part (ET), which is designed for insertion into a ground substrate (ES), is arranged,
**characterized in that** the fibrous material is fixed to the plug part (ET) with a in working position with the ground substrate contactable portion (E21, E22), and
**in that** the strand of fibrous material extends in the water transport direction from the handle part with a portion (E21) in the direction of a tip (SS) of the plug part (ET) and after deflection in a further portion (E22) back to the handle part.

2. Irrigation device according to claim 1, **characterized in that** the end region (EE) of the strand (SB) located downstream in the water transport direction is fixed to the handle part (GR), in particular clamped.

3. Irrigation device according to claim 1 or 2, **characterized in that** the ground spike, in particular its handle part (GR), predetermines by an asymmetrical shape an alignment of the ground spike relative to a plant, in which the portion (E21) of the strand extending, in respect to the water transport direction, downstream of the handle part in the direction of the tip (SS) of the plug part (ET) is located on the side of the plug part (ET) facing the plant (PF).

4. Irrigation device according to claim 3, **characterized in that** the asymmetrical shape comprises an inlet (EO) of the portion of the strand located upstream of the handle portion (GR) that is directed transversely to the insertion direction of the plug part.

5. Irrigation device according to one of claims 1 to 3, **characterized in that** the strand passes through the handle part.

6. Irrigation device according to one of claims 1 to 5, **characterized in that** the water transport line (WL) is releasably connected to the ground spike (SP).

7. Irrigation device according to claim 1 to 6, **characterized in that** the fibrous material is in the form of a flat band (SB).

8. Irrigation device according to claim 7, **characterized in that** the band has a nonplanar relief structure on at least one of its two opposite surfaces.

9. Irrigation device according to one of claims 1 to 8, **characterized in that** the handle part (GR) comprises at least two housing parts (G1, G2) displaceable relative to each other between a closed position and an open position.

10. Irrigation device according to claim 9, **characterized in that** the two housing parts (G1, G2) are connected hingedly by film hinges with a central part (KT) and form with the central part a contiguous plastic molded body.

11. Irrigation device according to claim 9, **characterized in that** the plug part (ET) is rigidly connected to the central part (KT).

12. Irrigation device according to one of claims 1 to 11, **characterized in that** the portion of the strand (SB) of fibrous material located upstream of the ground spike (SP) is surrounded by a watertight sheath (HU).

13. Irrigation device according to claim 12, **characterized in that** the watertight sheath (HU) extends beyond an insertion opening (EO) into the handle part (GR) of the ground spike (SP).

14. Irrigation device according to one of claims 1 to 14, **characterized in that** extensions (ED) of the handle part cover the fibrous material close to the handle part and can be inserted with the plug part into the ground substrate.

## Revendications

1. Système d'arrosage comprenant une conduite d'eau à capillarité, qui contient un brin (SB) en matériau fibreux et qui est conçue pour le contact du matériau fibreux, à une extrémité de distribution (E2) de la conduite d'eau (WL), avec un substrat de terre (ES) portant au moins une plante (PF),
une pique à planter (SP) de forme stable, dotée d'une partie de préhension et d'une partie d'enfoncement (ET) conçue pour être enfoncée dans un substrat de terre (ES), étant disposée à l'extrémité de distribution (E2) de la conduite d'eau (WL),
**caractérisé**
**en ce que** le matériau fibreux est fixé, avec une portion (E21, E22) pouvant être amenée en contact avec le substrat de terre en position de service, sur la partie d'enfoncement (ET),
et
**en ce que** le brin en matériau fibreux s'étend dans le sens de transport de l'eau depuis la partie de préhension avec une portion (E21) en direction d'une pointe (SS) de la partie d'enfoncement (ET) et revient à la partie de préhension dans une autre portion (E22) après un changement de direction.

2. Système d'arrosage selon la revendication 1, **caractérisé en ce que** la zone d'extrémité (EE) du brin (SB) se trouvant en aval dans le sens de transport de l'eau est fixée, en particulier coincée, sur la partie de préhension (GR).

3. Système d'arrosage selon la revendication 1 ou 2, **caractérisé en ce que** la pique à planter, en particulier sa partie de préhension (GR), indique, par une forme asymétrique, une orientation de la pique à planter par rapport à une plante, dans laquelle la portion (E21) du brin s'étendant depuis la partie de préhension, en aval de celle-ci par rapport au sens de transport de l'eau, en direction de la pointe (SS) de la partie d'enfoncement (ET) se trouve sur le côté de la partie d'enfoncement (ET) tourné vers la plante (PF).

4. Système d'arrosage selon la revendication 3, **caractérisé en ce que** la forme asymétrique comprend une entrée (EO), orientée transversalement au sens d'enfoncement de la partie d'enfoncement, de la portion du brin se trouvant en amont de la partie de préhension (GR).

5. Système d'arrosage selon l'une des revendications 1 à 3, **caractérisé en ce que** le brin s'étend à travers la partie de préhension.

6. Système d'arrosage selon l'une des revendications 1 à 5, **caractérisé en ce que** la conduite d'eau (WL) est reliée de manière détachable à la pique à planter (SP).

7. Système d'arrosage selon les revendications 1 à 6, **caractérisé en ce que** le matériau fibreux se présente sous la forme d'une bande (SB) plate.

8. Système d'arrosage selon la revendication 7, **caractérisé en ce que** la bande comporte sur au moins une de ses deux surfaces opposées une structure en relief non plane.

9. Système d'arrosage selon l'une des revendications 1 à 8, **caractérisé en ce que** la partie de préhension (GR) comprend au moins deux parties de boîtier (G1, G2) pouvant être déplacées l'une par rapport à l'autre entre une position de fermeture et une position d'ouverture.

10. Système d'arrosage selon la revendication 9, **caractérisé en ce que** les deux parties de boîtier (G1, G2) sont reliées à une partie centrale (KT) de manière articulée par le biais de charnières intégrales souples et forment avec la partie centrale un corps continu moulé par injection en matière plastique.

11. Système d'arrosage selon la revendication 9 ou 10, **caractérisé en ce que** la partie d'enfoncement (ET) est reliée de manière rigide à la partie centrale (KT).

12. Système d'arrosage selon l'une des revendications 1 à 11, **caractérisé en ce que** la portion du brin (SB) en matériau fibreux se trouvant en amont de la pique à planter (SP) est entourée d'une gaine (HU) étanche à l'eau.

13. Système d'arrosage selon la revendication 12, **caractérisé en ce que** la gaine (HU) étanche à l'eau s'étend dans la partie de préhension (GR) de la pique à planter (SP) jusque derrière une ouverture d'introduction (EO).

14. Système d'arrosage selon l'une des revendications 1 à 13, **caractérisé en ce que** des extensions (ED) de la partie de préhension recouvrent le matériau fibreux près de la partie de préhension et peuvent être enfoncées dans le substrat de terre avec la partie d'enfoncement.
